# EUROPEAN PATENT SPECIFICATION

(11) **EP 3 375 805 B1**
(45) Date of publication and mention of the grant of the patent: **25.12.2019**
(21) Application number: 18160085.9
(22) Date of filing: 06.03.2018
(51) Int. Cl.: C08G 65/332, C08G 65/333, D06P 1/607

(54) **NOVEL POLYMER CARRIER FOR LOW-TEMPERATURE DYE DESIGNED FOR POLYESTER FIBRES**
NEUARTIGER POLYMERTRÄGER FÜR TIEFTEMPERATURFARBSTOFFE FÜR POLYESTERFASERN
NOUVEAU SUPPORT POLYMÈRE POUR COLORANT À BASSE TEMPÉRATURE CONÇU POUR DES FIBRES DE POLYESTER

(30) Priority: 17.03.2017 IT 201700029963
(43) Date of publication of application: 19.09.2018
(73) Proprietor: Giovanni Bozzetto S.p.A., 24040 Filago (BG) (IT)
(72) Inventor: PARMA, Paolo, 24040 FILAGO (BG) (IT); VELLANI, Luca, 24040 FILAGO (BG) (IT); CIOLI, Fausto, 24040 FILAGO (BG) (IT); BARRA, Carlo, 24040 FILAGO (BG) (IT); DONEGA', Stefano, 24040 FILAGO (BG) (IT)
(74) Representative: Bianchetti Bracco Minoja S.r.l.

(56) References cited:
- GB-A- 797 175
- US-A- 4 169 206
- US-B1- 6 432 864
- DATABASE WPI Week 197348 Thomson Scientific, London, GB; AN 1973-73125U XP002774828, & JP S48 61787 A (MATI) 29 August 1973 (1973-08-29)

## Description

The present invention relates to compounds derived from polyethylene glycol, polypropylene glycol or ethylene oxide/propylene oxide copolymers mono- or difunctionalized with a dicarboxylic acid monoamide, their use as dye carriers for polyester fibers, and a method for their preparation.

### Prior art

Polyester fibers are normally dyed at a high temperature (130°C) using disperse dyes. Under said conditions the fibre swells, with loss of crystallinity, and the disperse dyes can thus penetrate the polymer matrix of the polyester, remaining trapped therein during cooling.

Various compounds that act as swelling agents have been known for some time, such as halogenated aromatic hydrocarbons, aromatic ethers, aromatic esters, butyl phthalimide or butyl benzoate, and others. Said compounds, defined as dye carriers or dyeing accelerators, allow the polyester fibre to be dyed at lower temperatures (95-110°C), thus saving energy. The use of a dye carrier also ensures that fibers which cannot withstand high temperatures (e.g. wool and elastic fibers) are not damaged if used in blends with polyester. Equipment that cannot be used at high temperatures can also be employed, thus increasing the flexibility of the dyeing process. Moreover, even if temperatures exceeding 110°C can be used, carriers reduce the process times, leading to cost savings.

The dye carriers currently available present some drawbacks, such as a marked odor, and contain organic solvent residues and inflammable ingredients; they are also governed by the European Reach Regulation, and are therefore subject to an onerous registration process. There is consequently a need for new dye carriers that do not present said drawbacks and can be obtained by a solvent-free process in a ready-for-use form, are easily measurable, even at low temperatures, and are emulsifiable in aqueous solutions and dyeing baths in the presence of other chemical auxiliaries normally used in polyester dyes such as pH buffers, dyes, levelling agents, dispersing agents, antifoaming agents and other additives in common use. Polyalkoxy diesters are known as additives to impart improved dyeing properties from GB-A-797175.

### Description of the invention

It has now been found that compounds derived from polyethylene glycol, polypropylene glycol or ethylene oxide/propylene oxide copolymers mono- or difunctionalized with a dicarboxylic acid monoamide solve said problems.

The present invention relates, in particular, to compounds of formula I

R-NR¹-CO-A-CO-O-X-CO-A-CO-NR¹-R (I)

wherein
X is selected from:
   - a polyoxyethylene chain of formula -(C₂H₄O)ₙ-, wherein n is a number such that the molecular weight of said chain is between 200 and 4000 Da;
   - a polyoxypropylene chain of formula -(C₃H₆O)ₘ-, wherein *m* is a number such that the molecular weight of said chain is between 200 and 4000 Da;
   - a mixed polyoxyethylene-polyoxypropylene chain containing n oxyethylene units of formula -(C₂H₄O)- and *m* oxypropylene units of formula -(C₃H₆O)-, wherein *n* and m are two numbers such that their sum determines a molecular weight of said mixed chain ranging between 200 and 4000 Da;
R is C₁-C₄ alkyl, phenyl, C₂-C₄ aminoalkyl, C₂-C₄ hydroxyalkyl, benzyl, or a group of formula -CH₂-CH₂-NH-(CH₂-CH₂-NH)ₚ-CH₂-CH₂-NH₂ wherein p is zero or 1;
R¹ is hydrogen or C₁-C₄ alkyl;
A is a 1,2-phenylene, ethylene, propylene or vinylene group, or a group of formula

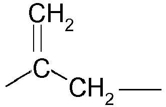

In the compounds of general formula I, the R, R¹ and A groups can be the same or different. However, compounds of formula I wherein R, R¹ and A are the same are preferred.

The preferred compounds of formula I are those wherein X is a polyoxyethylene chain having a molecular weight ranging between 200 and 4000 Da; X is 1,2-phenylene, R is C₁-C₄ alkyl and R¹ is hydrogen or C₁-C₄alkyl.

Particularly preferred is the compound of formula: 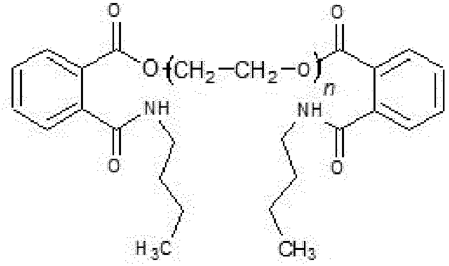 wherein n is the number of repeating units of the polyoxyethylene chain having a molecular weight ranging between 200 and 4000 Da.

A further subject of the invention is a process for the preparation of compounds of formula I. The process according to the invention comprises:
a) reacting polyethylene glycol, polypropylene glycol or a polyoxyethylene/polyoxypropylene copolymer having a molecular weight ranging between 200 and 4000 Da with a diacid of formula HOOC-A-COOH or an anhydride or derivative thereof, wherein A is as defined above, to give a compound of formula II

   HOOC-A-CO-O-X-O-CO-A-COOH (II)

   wherein X and A are as defined above;
b) reacting the compound of formula II with an amine of formula RR¹NH wherein R and R¹ are as defined above.

Step a) is typically conducted by reacting 0.5-1.5 moles of polyethylene glycol, polypropylene glycol or ethylene oxide/propylene oxide copolymer, having a molecular weight ranging between 200 and 4000 Da, with 1.5-2.5 moles of an anhydride of a dicarboxylic acid HOOC-A-COOH at a temperature ranging between 60°C and 100°C for a time of 2 to 10 h.

The anhydrides can be selected from phthalic, maleic, succinic, glutaric and itaconic anhydride, preferably phthalic anhydride.

As an alternative to anhydrides, the corresponding acids or activated derivatives thereof, such as acyl chlorides or mixed esters, can be used. If acids are used, reaction a) is typically conducted at a temperature ranging between 60°C and 180°C for a time of between 2 and 20 hours, optionally in the presence of a catalyst, distilling the reaction water.

Step b) is conducted by reacting the compound obtained at step a) with 0.5-2.5 moles of the amine of formula RR¹NH at a temperature ranging between 60 and 180°C, preferably between 60 and 100°C, for a time of between 1 and 10 hours, distilling the reaction water and optionally applying a nitrogen flow and/or vacuum.

The preferred amines of formula RR¹NH include butylamine, isobutylamine, isopropylamine, n-propylamine, ethylamine, methylamine, monoethanolamine (MEA), diethanolamine (DEA), dibutylamine, ethylenediamine, benzylamine and N-methylaniline. N-butylamine is particularly preferred.

The compounds of formula I are excellent polyester dye carriers and, unlike those already on the market, only have a slight odor, contain no organic solvents or inflammable ingredients and, being polymers, are not subject to the onerous registration procedures required by the REACH Regulation.

For use as dye carriers, the compounds of formula I are formulated in aqueous solutions and dyeing baths in the presence of other chemical auxiliaries normally used in polyester dyeing such as pH buffers, dyes, levelling agents, dispersing agents, antifoaming agents, and other additives in common use.

The formulations of compounds I are typically prepared by mixing the dye carrier in water, at a temperature ranging between 20 and 100°C, with surfactants, in particular with C4-C20 ethoxylated alcohols having degrees of ethoxylation ranging from 2 to 50 EO, ethoxylated alcohols, ethoxylated amines, fatty acids or derivatives of ethoxylated fatty acids, ethoxylated oils, anionic emulsifiers such as alkyl sulfosuccinates, alkyl benzene sulfonic acids and the salts thereof, phosphoric esters of ethoxylated alcohols, carboxylated ethoxylated alcohols, sulfonates, and sulphated ethoxylated alcohols. The formulations can also include pH correctors such as NaOH, KOH and amines, or acids such as formic, acetic, citric, lactic and glycolic acid.

The formulation of compounds I according to the invention not only improves the penetration of the dye, but also aids the dispersion of the dyes and dyeing levelling.

The invention is illustrated in greater detail in the examples below.

### Example 1

121 g of polyethylene glycol 200 is loaded into a 500 ml flask equipped with reflux and temperature probe, and heated under stirring, and under a light nitrogen flow, to about 80°C. 179 g of phthalic anhydride is then loaded at said temperature in about 120 minutes. After loading, the mixture is heated to about 95°C, and maintained at said temperature for 3 hours, monitoring the acid number. The mixture is then cooled to about 90°C, and 87 g of butylamine is loaded under nitrogen flow in about 1 hour. After loading, the mixture is left at 90-95°C for about 2 hours, then heated to 165°C, and said temperature is maintained until distillation of about 22 g of water. A sample is taken to check that the product complies with the specifications.

The finished product has an infrared spectrum with typical absorptions at 1700 cm⁻¹; 1770 cm⁻¹; 1615 cm⁻¹; 720 cm⁻¹; and UV absorption with a peak at about 220 nm. The resulting product is then formulated as in the examples below.

### Example 2

| | |
|---|---|
| Compound of formula I | 10-90% |
| Ethoxylated castor oil (5-100 EO) | 0-50% |
| Alkyl benzene sulfonic acid | 0-20% |
| TEA | 0-20% |

### Example 3

| | |
|---|---|
| Compound of formula I | 10-90% |
| Ethoxylated castor oil (5-100 EO) | 0-50% |
| Sodium sulfosuccinate | 0-20% |
| Alkyl benzene sulfonic acid | 0-20% |
| C4-C20 ethoxylated (2-50 EO) | 0-20% |
| C4-C20 ethoxylated fatty amine (2-100 EO) | 0-20% |

## Claims

1. Compounds of formula I
R-NR¹-CO-A-CO-O-X-CO-A-CO-NR¹-R (I)
wherein
X is selected from:
- a polyoxyethylene chain of formula -(C₂H₄O)ₙ-, wherein n is a number corresponding to a molecular weight of said chain ranging from 200 to 4000 Da;
- a polyoxypropylene chain of formula -(C₃H₆O)ₘ-, wherein *m* is a number corresponding to a molecular weight of said chain ranging from 200 to 4000 Da;
- a mixed polyoxyethylene-polyoxypropylene chain containing *n* oxyethylene units of formula -(C₂H₄O)- and *m* oxypropylene units of formula -(C₃H₆O)-, wherein *n* and *m* are two numbers the sum of which determines a molecular weight of said mixed chain ranging from 200 to 4000 Da;
R is C₁-C₄ alkyl, phenyl, C₂-C₄ aminoalkyl, C₂-C₄ hydroxyalkyl, benzyl, or a group of formula -CH₂-CH₂-NH-(CH₂-CH₂-NH)ₚ-CH₂-CH₂-NH₂ wherein p is zero or 1;
R¹ is hydrogen or C₁-C₄ alkyl;
A is a 1,2-phenylene, ethylene, propylene or vinylene group or a group of formula

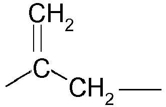

2. Compounds according to claim 1 wherein X is a polyoxyethylene chain of formula -(C₂H₄O)ₙ-, wherein *n* is a number corresponding to a molecular weight of said chain ranging from 200 to 4000 Da.

3. Compounds according to claim 1 or 2, wherein groups R, R¹ and A can be the same or different.

4. Compounds according to any one of claims 1 to 3, wherein A is a 1,2-phenylene group.

5. Compounds according to any one of claims 1 to 4, wherein R¹ is hydrogen.

6. A compound according to claim 1, of formula 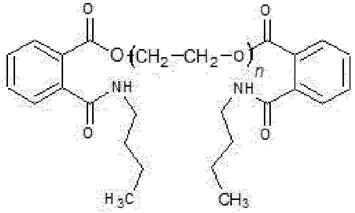 wherein n is the number of repeating units of the polyoxyethylene chain having a molecular weight ranging from 200 to 4000 Da.

7. A process for the preparation of the compounds of formula I which comprises:
a) reacting polyethylene glycol, polypropylene glycol or a polyoxyethylene/polyoxypropylene copolymer having a molecular weight ranging from 200 to 4000 Da with a diacid of formula HOOC-A-COOH or an anhydride or derivative thereof, wherein A is as defined in claim 1, to give a compound of formula II
HOOC-A-CO-O-X-O-CO-A-COOH (II)
wherein X and A are as defined above;
b) reacting the compound of formula II with an amine of formula RR¹NH wherein R and R¹ are as defined above.

8. Formulations for dyeing a polyester fibre comprising a compound of claims 1-6 in the form of aqueous emulsions in a mixture with surfactants and optionally buffering agents, dyes, levelling agents, dispersants and antifoaming agents.

9. A method of dyeing polyester fibre which comprises treating the fibre with the formulations of claim 8.

## Patentansprüche

1. Verbindungen der Formel I
R-NR¹-CO-A-CO-O-X-CO-A-CO-NR¹-R (I)
worin
X ausgewählt ist aus:
- einer Polyoxyethylenkette der Formel -(C₂H₄O)ₙ-, worin n eine Zahl ist entsprechend einem Molekulargewicht der Kette im Bereich von 200 bis 4000 Da;
- einer Polyoxypropylenkette der Formel -(C₃H₆O)ₘ-, worin m eine Zahl ist entsprechend einem Molekulargewicht der Kette im Bereich von 200 bis 4000 Da;
- einer gemischten Polyoxyethylen-polyoxypropylenKette, enthaltend n Oxyethyleneinheiten der Formel -(C₂H₄O)- und m Oxypropyleneinheiten der Formel -(C₃H₆O)-, worin n und m zwei Zahlen sind, deren Summe das Molekulargewicht der gemischten Kette bestimmt im Bereich von 200 bis 4000 Da;
R gleich C₁-C₄-Alkyl, Phenyl, C₂-C₄-Aminoalkyl, C₂-C₄-Hydroxyalkyl, Benzyl oder einer Gruppe der Formel -CH₂-CH₂-NH-(CH₂-CH₂-NH)ₚ-CH₂-CH₂-NH₂ ist, worin p gleich 0 oder 1 ist;
R¹ gleich Wasserstoff oder C₁-C₄-Alkyl ist;
A gleich eine 1,2-Phenylen-, Ethylen-, Propylen- oder Vinylengruppe ist oder eine Gruppe der Formel

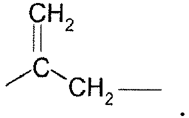

2. Verbindungen gemäß Anspruch 1, worin X eine Polyoxyethylenkette der Formel -(C₂H₄O)ₙ- ist, worin n eine Zahl ist entsprechend einem Molekulargewicht der Kette im Bereich von 200 bis 4000 Da.

3. Verbindungen gemäß Anspruch 1 oder 2, worin die Gruppen R, R¹ und A gleich oder verschieden sein können.

4. Verbindungen gemäß einem der Ansprüche 1 bis 3, worin A eine 1,2-Phenylengruppe ist.

5. Verbindungen gemäß einem der Ansprüche 1 bis 4, worin R¹ Wasserstoff ist.

6. Verbindung gemäß Anspruch 1, der Formel 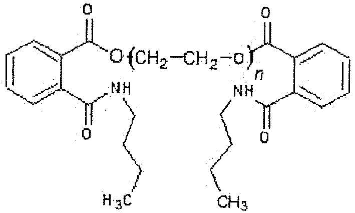 worin n die Anzahl der Wiederholungseinheiten der Polyoxyethylenkette mit einem Molekulargewicht im Bereich von 200 bis 4000 Da ist.

7. Verfahren zur Herstellung der Verbindungen der Formel I, welches umfasst:
a) Umsetzung von Polyethylenglykol, Polypropylenglykol oder einem Polyoxyethylen/Polyoxypropylen-Copolymeren mit einem Molekulargewicht im Bereich von 200 bis 4000 Da mit einer Disäure der Formel HOOC-A-COOH oder einem Anhydrid oder Derivat davon, worin A wie in Anspruch 1 definiert ist, um eine Verbindung der Formel II zu erhalten
**HOOC-A-CO-O-X-O-CO-A-COOH** **(II)**
worin X und A wie vorstehend definiert sind;
b) Umsetzung der Verbindung der Formel II mit einem Amin der Formel RR¹NH, worin R und R¹ wie vorstehend definiert sind.

8. Formulierungen zum Färben einer Polyesterfaser, umfassend eine Verbindung nach den Ansprüchen 1-6 in Form von wässrigen Emulsionen in einem Gemisch mit Tensiden und gegebenenfalls Puffersubstanzen, Farben, Nivellierungsmitteln, Dispergiermitteln und Antischaummitteln.

9. Verfahren zum Färben einer Polyesterfaser, umfassend die Behandlung der Faser mit den Formulierungen nach Anspruch 8.

## Revendications

1. Composés de formule 1
R-NR¹-CO-A-CO-O-X-CO-A-CO-NR¹-R (I)
dans laquelle
X est choisi parmi :
- une chaîne polyoxyéthylène de formule -(C₂H₄O)ₙ-, dans laquelle *n* est un nombre correspondant à un poids moléculaire de ladite chaîne allant de 200 à 4 000 Da ;
- une chaîne polyoxypropylène de formule -(C₃H₆O)ₘ-, dans laquelle *m* est un nombre correspondant à un poids moléculaire de ladite chaîne allant de 200 à 4 000 Da ;
- une chaîne mixte de polyoxyéthylène-polyoxypropylène contenant *n* motifs oxyéthylène de formule -(C₂H₄O)- et *m* motifs oxypropylène de formule -(C₃H₆O)-, dans laquelle *n* et *m* sont deux nombres dont la somme détermine un poids moléculaire de ladite chaîne mixte allant de 200 à 4 000 Da ;
R est un alkyle en C₁-C₄, un phényle, un aminoalkyle en C₂-C₄, un hydroxyalkyle en C₂-C₄, un benzyle ou un groupe de formule -CH₂-CH₂-NH-(CH₂-CH₂-NH)ₚ-CH₂-CH₂-NH₂ dans laquelle p est zéro ou 1 ;
R¹ est un atome d'hydrogène ou un alkyle en C₁-C₄ ;
A est un groupe 1,2-phénylène, éthylène, propylène ou vinylène ou un groupe de formule

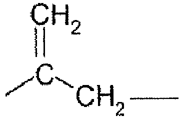

2. Composés selon la revendication 1, dans lesquels X est une chaîne polyoxyéthylène de formule -(C₂H₄O)ₙ-, dans laquelle *n* est un nombre correspondant à un poids moléculaire de ladite chaîne allant de 200 à 4 000 Da.

3. Composés selon la revendication 1 ou 2, dans lesquels les groupes R, R¹ et A peuvent être identiques ou différents.

4. Composés selon l'une quelconque des revendications 1 à 3, dans lesquels A est un groupe 1,2-phénylène.

5. Composés selon l'une quelconque des revendications 1 à 4, dans lesquels R¹ est un atome d'hydrogène.

6. Composé selon la revendication 1, de formule 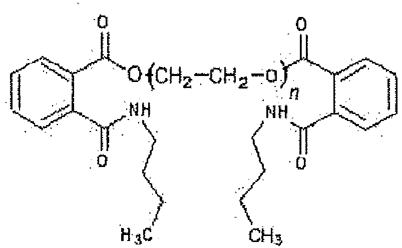 dans laquelle n est le nombre de motifs de répétition de la chaîne polyoxyéthylène ayant un poids moléculaire allant de 200 à 4 000 Da.

7. Procédé de préparation des composés de formule 1 qui comprend :
a) la réaction de polyéthylène glycol, de polypropylène glycol ou d'un copolymère de polyoxyéthylène/polyoxypropylène ayant un poids moléculaire allant de 200 à 4 000 Da avec un diacide de formule HOOC-A-COOH ou un de ses anhydrides ou dérivés, dans laquelle A est tel que défini dans la revendication 1, pour donner un composé de formule II
HOOC-A-CO-O-X-O-CO-A-COOH (II)
dans laquelle X et A sont tels que définis ci-dessus ;
b) la réaction du composé de formule II avec une amine de formule RR¹NH dans laquelle R et R¹ sont tels que définis ci-dessus.

8. Formulations pour la teinture d'une fibre de polyester comprenant un composé selon les revendications 1 à 6 sous la forme d'émulsions aqueuses en mélange avec des agents tensioactifs et éventuellement des agents tampons, des colorants, des agents égalisants, des agents dispersants et des agents antimousse.

9. Procédé de teinture d'une fibre de polyester qui comprend le traitement de la fibre avec les formulations selon la revendication 8.
